# FASCICULE DE BREVET EUROPEEN

(11) **EP 1 151 664 B1**
(45) Date de publication et mention de la délivrance du brevet: **12.03.2003**
(21) Numéro de dépôt: 01460025.8
(22) Date de dépôt: 25.04.2001
(51) Int. Cl.: A01K 45/00, B65G 47/68

(54) **Dispositif d'alignement et de séparation de volailles vivantes**
Vorrichtung zum Ausrichten und Trennen von lebendem Geflügel
Device for alligning and separating live poultry

(30) Priorité: 02.05.2000 FR 0005593
(43) Date de publication de la demande: 07.11.2001
(73) Titulaire: Carrée, Francis, F-22600 Loudeac (FR)
(72) Inventeur: Carrée, Francis, F-22600 Loudeac (FR)

(56) Documents cités:
- US-A- 1 990 549
- US-A- 4 452 178
- US-A- 4 567 978
- US-A- 5 983 837

## Description

La présente invention se rapporte à un dispositif d'alignement et de séparation de volailles vivantes pour les présenter séparées à l'unité sur un tapis de remplissage des caisses de conteneurs.

A ce jour différents moyens de ramassage de volailles vivantes au sol semblent donner satisfaction, mais tous les procédés butent sur le problème du comptage - à une unité près - lors de la mise en caisses et ce, à une cadence très rapide. Les caisses surchargées provoquent de la mortalité par étouffement et les caisses sous chargées en nombre perturbent la cadence d'abattage. Tout ceci occasionne une gêne quant à la régularité sur la chaîne d'abattage. Le document US-A-5 983 837 décrit un dispositif pour séparer et compter des volailles.

Dans le but d'assurer un alignement et une séparation parfaite pour un comptage précis, le dispositif selon la revendication 1 comporte un tapis roulant sensiblement de même largeur sur toute sa longueur, à vitesse linéaire variable. De chaque côté du tapis où se trouve la réception des animaux, et en sa partie supérieure, des guides mobiles actionnés d'un mouvement alternatif sont solidaires des axes fixés sur les poutrelles du bâti. Ces guides vibrants, de forme et de matière variables suivant la constitution des animaux afin de ne pas les blesser, se rapprochent du centre du tapis par l'extrémité en aval du tapis sur lequel se trouvent les animaux.

Ce dispositif peut être disposé entre un tapis roulant de réception des animaux et un dispositif de mise en caisses. Ce dit tapis est équipé d'un moyen de comptage, optique de préférence, électronique ou mécanique. Le tout formant au moins un ensemble posé sur un châssis automoteur ou tracté.

Selon une autre importante caractéristique de l'invention, sur le tapis roulant de réception des animaux, un rotor muni de doigts souples positionné à la sortie de ce tapis est réglable en hauteur à vitesse variable régularise pour leur présentation sur le tapis suivant d'alignement et de séparation.

Etant donné la diversité des animaux à ramasser et à compter, par exemple du coquelet de 900 grammes au dindon de 10 kilogrammes, d'autres caractéristiques et avantages de l'invention ressortiront des revendications et de la description ci-après, d'exemples de réalisations non limitatifs de l'invention, avec référence aux dessins annexés dans lesquels :
- La figure 1 représente schématiquement une coupe longitudinale du dispositif d'alignement et de séparation des animaux selon l'invention.
- La figure 2 représente schématiquement une vue de dessus du dispositif d'alignement et de séparation des animaux selon l'invention.
- La figure 3 représente schématiquement une coupe longitudinale d'un ensemble de tapis au milieu duquel se trouve le tapis d'alignement et de séparation des animaux selon le dispositif de l'invention. Ce tapis est situé entre au moins deux autres tapis, un servant à recevoir les animaux ramassés et l'autre servant à recevoir les animaux alignés pour leur mise en caisse. L'ensemble repose sur un châssis automoteur ou tracté.
- La figure 4 représente schématiquement une vue de dessus d'un ensemble des tapis tels que décrits figure 3.
- La figure 5 représente schématiquement une vue de dessus de plusieurs ensembles de tapis, montés en parallèle, tels que décrits figure 3 pour la mise en place des volailles vivantes dans les caisses des conteneurs placés de part et d'autre de la machine selon l'invention.

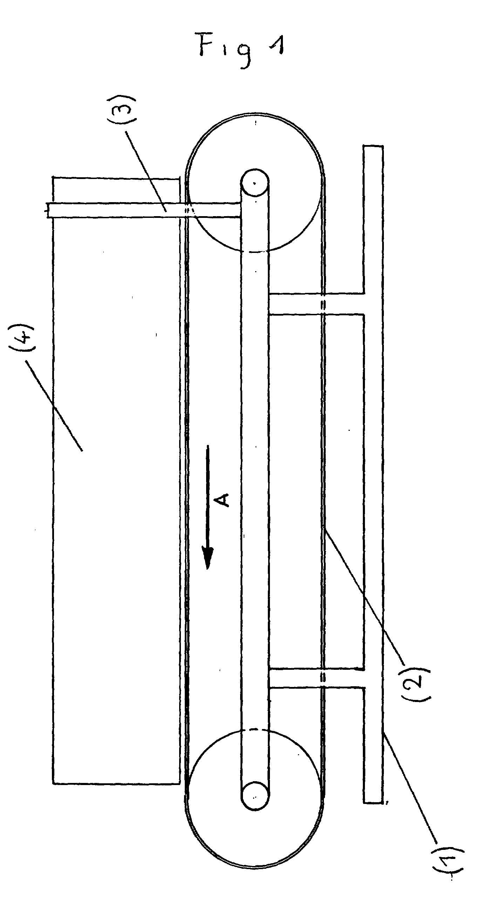

Tel qu'il est représenté sur la figure 1, le procédé d'alignement et de séparation des animaux selon l'invention est une vue de côté. Il comporte un bâti (1) réalisé au moyen de poutrelles qui supportent le tapis roulant (2) se déplaçant dans le sens de la flèche (A). Dans la partie avant est fixé l'axe (3) où pivotent les guides mobiles (4).

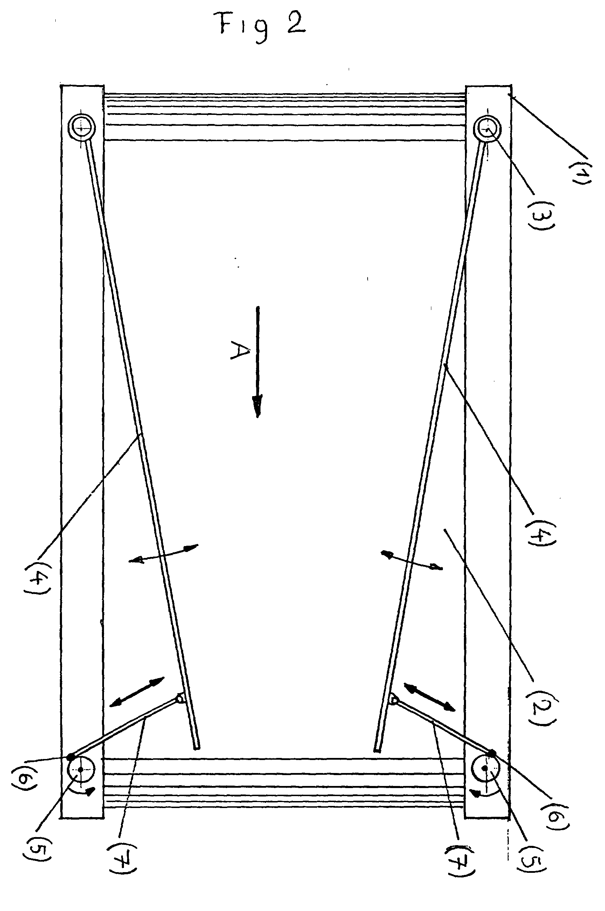

Tel qu'il est représenté sur la figure 2,, le procédé d'alignement et de séparation des animaux selon l'invention est une vue de dessus. Il comporte le bâti (1) composé de poutrelles qui supportent le tapis roulant (2) se déplaçant dans le sens de la flèche (A). Dans la partie amont est fixé l'axe (3) où pivotent les guides mobiles (4), actionnés par les poulies (5) munies d'un axe déporté (6) par rapport au centre agissant sur les biellettes (7) donnant le mouvement alternatif aux guides (4).

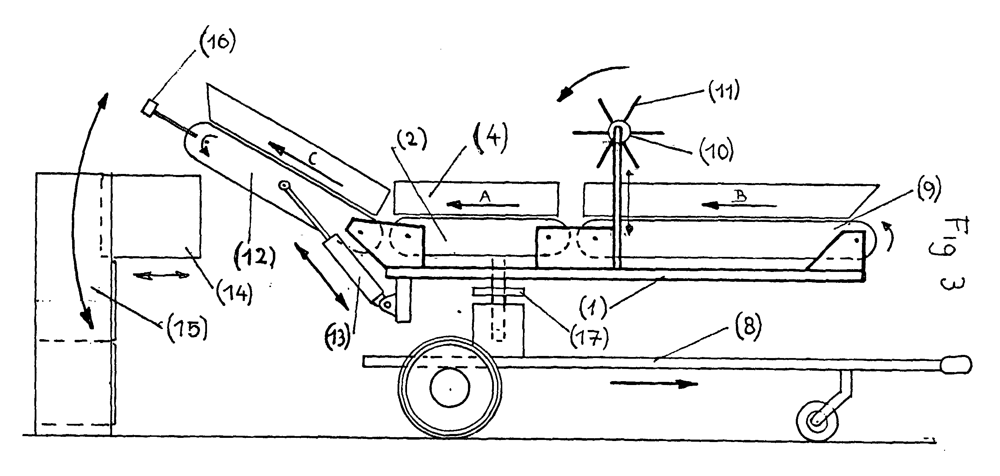

Tel qu'il est représenté sur la figure 3, le procédé d'alignement et de séparation des animaux-selon l'invention est une vue de côté. Il comporte un ensemble de tapis fixé sur le châssis (8) où reposent les poutrelles du bâti (1). Ces poutrelles supportent le tapis roulant (2) disposé entre un tapis roulant de réception des animaux (9) et un tapis roulant (12). Le tapis roulant de réception des animaux (9) a une vitesse variable et se déplace dans le sens de la flèche (B). Ce tapis de réception (9) est muni à sa sortie d'un rotor (10) sur lequel sont fixés les doigts souples (11). Ce rotor, réglable en hauteur et en vitesse, régularise la sortie des animaux. Le tapis roulant (12) tourne dans le sens de la flèche (C), est réglable verticalement par le vérin (13) pour déposer les animaux à chaque étage des caisses (14) des conteneurs (15). Dans la position verticale il dégage un passage d'une personne permettant l'ouverture et la fermeture des caisses.

Ce dit tapis (12) est équipé à sa sortie du support (16) du procédé de comptage, optique de préférence.

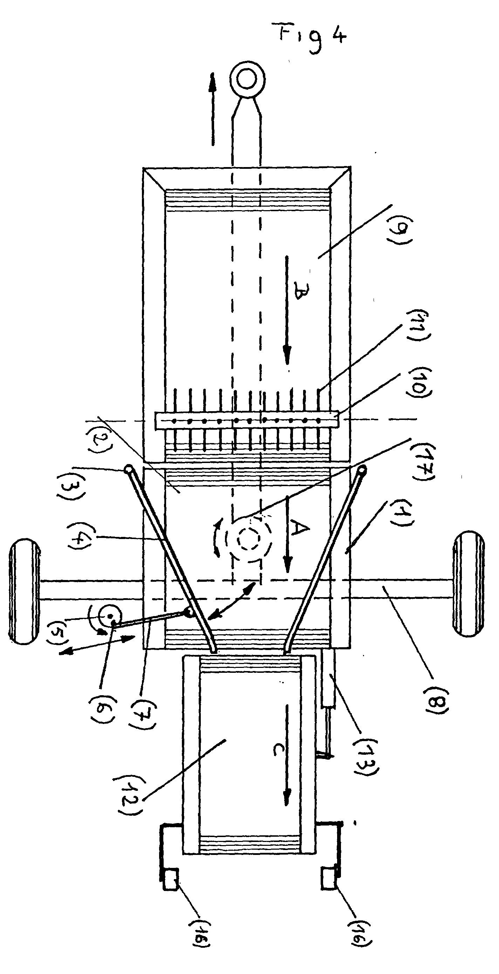

Tel qu'il est représenté sur la figure 4, le procédé d'alignement et de séparation des animaux selon l'invention est une vue de dessus, telle que décrite figure 3.

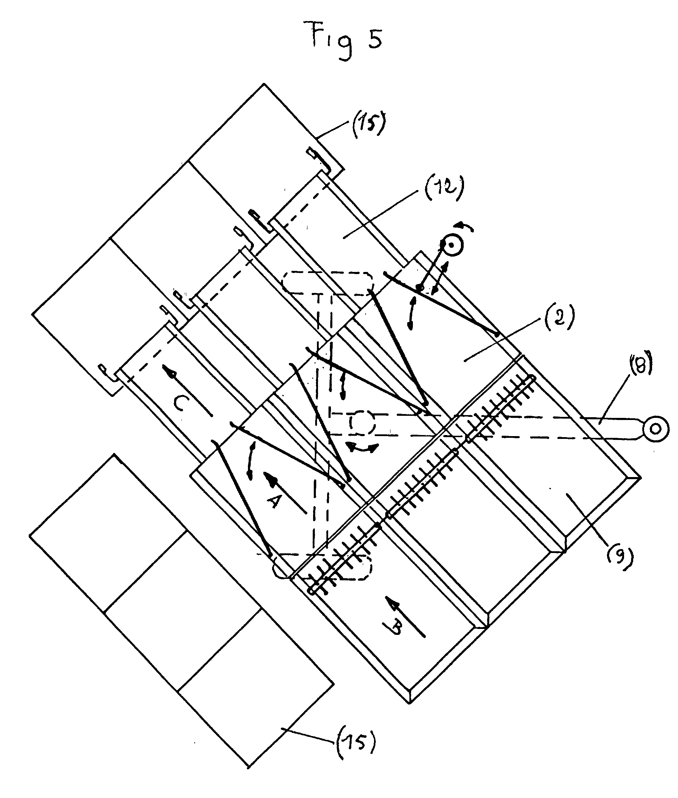

Tel qu'il est représenté sur la figure 5, le procédé d'alignement et de séparation des animaux selon l'invention est une vue de dessus de réalisation de plusieurs ensemble de tapis montés en parallèle, pour la mise en place des volailles vivantes dans les caisses (14) des conteneurs (15) placés de part et d'autre de la machine. Cet ensemble complet a une rotation pouvant atteindre 360 degrés, au moyen d'une tourelle (17) intercalée entre le châssis (8) et le bâti (1).

Les guides (4) sont à écartement variable et peuvent être vibrants d'un ou des deux côtés. La vitesse et l'amplitude des vibrations de ces guides(4) sont variables également. Ces guides vibrants (4) ont un mouvement indépendant l'un par rapport à l'autre ou synchronisé, ils peuvent avoir un mouvement indépendant ou proportionnel à l'avancement du tapis (2). Le dispositif peut être composé d'un ou plusieurs ensembles montés en parallèle, de manière à augmenter le débit des volailles tout en diminuant la vitesse linéaire des tapis, ceci afin de ne pas blesser les animaux.

Des modifications restent possibles, notamment en ce qui concerne la constitution des divers éléments ou par substitution d'équivalents techniques, sans pour autant sortir du domaine de protection défini dans les revendications.

## Revendications

1. Dispositif d'alignement et de séparation de volailles vivantes pour les présenter séparées à l'unité sur un tapis de remplissage des caisses (14) des conteneurs (15), ledit dispositif comportant un bâti (1) composé de poutrelles qui supportent un tapis roulant (2) sensiblement de même largeur sur toute sa longueur et à vitesse linéaire variable, et **caractérisé en ce qu'**il comprend des guides mobiles vibrants (4), actionnés d'un mouvement alternatif, solidaires des axes (3) fixés sur les poutrelles du bâti et se trouvant de chaque côté de ce tapis (2) recevant les animaux en sa partie supérieure, ledits guides vibrants (4) étant de forme et de matière variables suivant la constitution des animaux et se rapprochant du centre du tapis (2), de l'amont vers l'aval dans le sens de circulation du tapis (2).

2. Dispositif selon la revendication 1 **caractérisé en ce que** les guides (4) vibrants sont à écartements variables.

3. Dispositif selon la revendication 1 **caractérisé en ce que** les vibrations des guides (4) ont une vitesse et une amplitude variables.

4. Dispositif selon la revendication 1 **caractérisé en ce que** les guides (4) peuvent être vibrants d'un ou des deux côtés.

5. Dispositif selon la revendication 1 **caractérisé en ce que** les guides (4) vibrants ont un mouvement indépendant l'un par rapport à l'autre ou synchronisé.

6. Dispositif selon la revendication 1 **caractérisé en ce que** les guides (4) vibrants peuvent avoir un mouvement indépendant ou proportionnel à l'avancement du tapis (2).

7. Dispositif selon la revendication 1 **caractérisé en ce que** le dispositif peut être composé d'un ou plusieurs ensembles montés en parallèle, de manière à augmenter le débit des volailles tout en diminuant la vitesse linéaire des tapis, et ceci afin de ne pas blesser les animaux.

8. Dispositif selon la revendication 1 **caractérisé en ce qu'**il comprend un tapis de réception (9) qui est muni en sa partie supérieure d'un rotor (10) équipé de doigts souples (11), ce dit rotor (10) étant réglable en vitesse et en hauteur et régularisant la sortie des animaux.

9. Dispositif selon la revendication 1 **caractérisé en ce que**'il comprend un tapis de dépose (12) des animaux dans des caisses (14) qui est réglable verticalement pour permettre le dégagement entre le dispositif et le conteneur facilitant le passage d'une personne pour l'ouverture et la fermeture des caises.

## Claims

1. Device to align and to separate live poultry so that they are standing, separated, one after the other, on the conveyor belt which fills up the boxes (4) and the containers (15). This device is composed of a framework that is made of little beams ; these beams support a conveyor belt (2), of the same width all along its length and at a variable linear speed. The conveyor belt is made of vibrating mobile guides (4) which are set up by an alternative move and which depend on the axis (3) that are on the beams of the framework. These vibrating guides (4) which are of different forms and different matters according to the composition of the poultry, and, which are on the two sides of the conveyor belt, go towards the centre of the conveyor belt (2) which receiving poultry on its upper part, from upstream to downstream in the traffic way of the conveyor belt (2).

2. Device according to the claim number 1 **characterized by** the fact that the vibrant leaders (4) have variable separations.

3. Device according to the claim number 1 **characterized by** the fact that the vibrant leaders (4) have a variable speed and a variable extend.

4. Device according to the claim number 1 **characterized by** the fact that the vibrant leaders (4) can be vibrant on one side or on the two sides.

5. Device according to the claim number 1 **characterized by** the fact that the vibrant leaders (4) have a move which is independent (one of the other) or synchronised.

6. Device according to the claim number 1 **characterized by** the fact that the vibrant leaders (4) can move independently or proportionally to the progress of the conveyor belt (2).

7. Device according to the claim number 1 **characterized by** the fact that the device can be made of one or several set-in-parallel elements to increase the number of poultry, decreasing in the same time the linear speed of the conveyor belt in order not to hurt the poultry.

8. Device according to the claim number 1 **characterized by** the fact that it is composed of a delivery conveyor belt (9) which has a rotor (10) on its upper part ; the speed and the height of this rotor, equipped of flexible fingers (11), are adjustable ; this rotor regularises the going out of the poultry.

9. Device according to the claim number 1 **characterized by** the fact it is made of a conveyor belt that sets down (12) live poultry in the boxes (14) ; this conveyor belt is vertically adjustable to let room enough between the device and the container so that a person can open and close the boxes.

## Patentansprüche

1. Vorrichtung um lebendene Geflügeln in Linie zu formieren und zu scheiden, damit sie ein nach einandem auf einen Fließband eintreffen, im Ziel Kisten (14) und Container (15) auszufüllen.
Diese vorrichtung besteht aus einem Unterbau (1), der aus Trägem besteht; diese Träger tragen ein Fließband (2), das fast gleichbreit auf seiner ganze Länge ist und eine lineare schwankende Gescwhindigkeit hat. Diese Fließband besteht aus vibrierenden mobilen Führungen (4), die mit einer alternativen Bewegung in Gang gesetzt werden, und, die solidarisch der Achsen sind (3); diese Achsen werden an den Trägem des Unterbaus festgeschraubt Diese vibrierenden Führungen (4), die von unterschiedenen Formen und Stoffen gemäß der Beschaffenheit der Geflügeln sind, und, die zu beiden Zeiten des Fließbands sind, kommen an das Zentrum des Fließbands (2) (wo die Geflügeln eintreffen - Oberteil des Fließbands) heran (stromauswärts zu stromabwärts, in der Richtung des Umlaufs des Fließbands (2)).

2. Vorrichtung gemäß dem ersten Anspruch wird bezeichnet: die vibrierenden Führungen (4) sind unterschiedlich Aubreiten.

3. Vorrichtung gemäß dem ersten Anspruch wird bezeichnet : die vibrierenden Führungen haben eine veränderliche Geschwindigkeit und eine veränderliche Weite.

4. Vorrichtung gemäß dem ersten Anspruch wird bezeichnet: die vibrierenden Führungen (4) können entweder auf einer Seite oder beiden Seits sein.

5. Vorrichtung gemäß dem ersten Anspruch wird bezeichnet: die vibrierenden Führungen (4) bewegen sich entweder unabhängig oder gleichlaufend.

6. Vorrichtung gemäß dem ersten Anspruch wird bezeichnet : die vibrierenden Führungen (4) können sich entweder unabhängig oder im Verhältnis zur der Bewegung des Fließbands.

7. Vorrichtung gemäß dem ersten Anspruch wird bezeichnet: die Vorrichtung kann aus einem oder mehreren parallelgeschalteten Elemente, um die Menge der Geflügeln anzuwachsen, und gleichzeitig, die lineare Geschwindigkeit des Fließbands abzunehmen, damit die Geflügeln nicht verletzt geworden werden.

8. Vorrichtung gemäß dem ersten Anspruch wird bezeichnet : sie besteht aus einem Annahmesfließband (9) das an dem Oberteil einen Rotor (10) mit elastischen Fingem (11) hat. Die Geschwindigkeit und die Höhe dieses Rotor (10) werden gestellt; der Rotor reguliert den Ausgang den Geflügeln.

9. Vorrichtung gemäß dem ersten Anspruch wird bezeichnet: sie besteht aus einem Fließband (12), das die Geflügel in die Kiste (14) niederliegt. Dieses Fließband wird senkrecht gestellt, damit das Fließband zwischen die Vorrichtung und die Container umgestellt wird; also hat ein Person die Möglichkeit die Kiste auf- und zuzumachen.
